# EUROPEAN PATENT APPLICATION

(11) **EP 4 718 649 A1**
(43) Date of publication of application: **01.04.2026**
(21) Application number: 24203725.7
(22) Date of filing: 30.09.2024
(51) Int. Cl.: H02B 11/24

(54) **FLAP MECHANISM FOR A CIRCUIT BREAKER ARRANGEMENT**

(71) Applicant: Siemens Aktiengesellschaft, 80333 München (DE)
(72) Inventor: KALE, Abhishek, 412105 Pune, Maharashtra (IN)
(74) Representative: Patentanwaltskanzlei WILHELM & BECK

(57) **Abstract**

A kinematic linkage arrangement for a flap mechanism (200A) of a circuit breaker arrangement is disclosed. The kinematic linkage arrangement at least six members (208A, 210A, 214A, 216A, 224A and 228A) operably connected therebetween, such that one or more of the six members (208A, 210A, 214A, 216A, 224A and 228A) are operably connected to an upper flap (202A) and a lower flap (204A) of a flap mechanism for a circuit breaker arrangement, wherein the kinematic linkage arrangement, when operated causes the members (208A, 210A, 214A, 216A, 224A and 228A) to, provides and/or limit access to one or more of a busbar compartment via movement of the upper flap (202A), and a cable compartment of the circuit breaker arrangement via movement of the lower flap (204A), wherein the kinematic linkage arrangement is operably coupled to a breaker part (206A) associated with the circuit breaker arrangement.

## Description

### TECHNICAL FIELD

The present invention relates to a flap mechanism for use in circuit breaker arrangements, particularly in the context of breaker rack-in/rack-out operations.

### BACKGROUND

In electrical panels, breakers are linearly racked inside the electrical panel and engaged with the bushings. Between the breaker contact and the bushings, flaps are positioned. These flaps are designed to open and close synchronously with the breaker position.

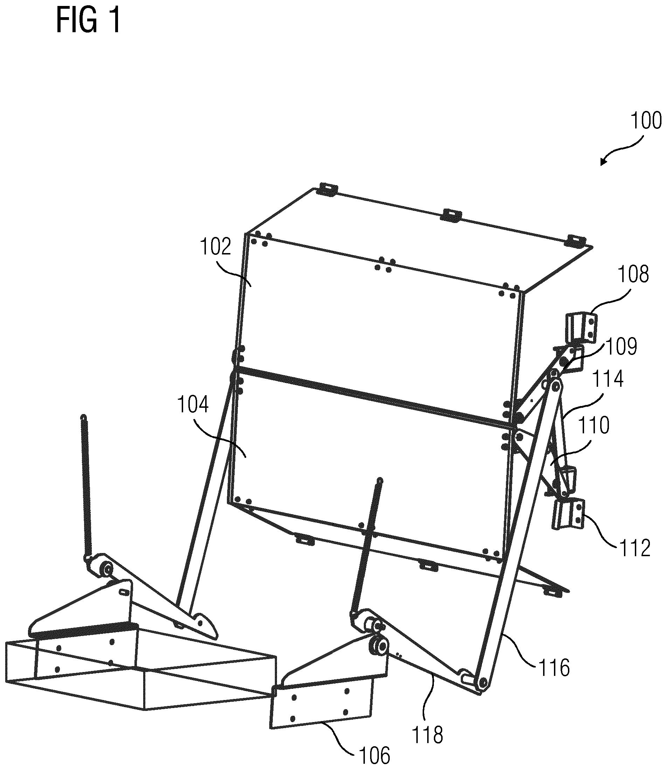

However, existing panel systems operate both upper and lower flaps in synchronous fashion to open/close the flap mechanism. FIG 1 shows a flap mechanism 100 of a circuit breaker arrangement, in accordance with prior art. The flap mechanism consists of an upper flap 102 that provides access to a busbar compartment of the circuit breaker arrangement and a lower flap 104 that provides access to a cable compartment of the circuit breaker arrangement. The upper flap 102 and the lower flap 104 are operably coupled to a breaker part 106 that moves along a linear axis via a linkage mechanism. As the breaker part 106 racks in, i.e., moves towards the cable or busbar compartment, the linkage mechanism causes both the upper flap 102 and the lower flap 104 to open, thereby providing access to the busbar compartment and the cable compartment simultaneously.

More particularly, the linkage mechanism comprises a first member 109 having a first end attached to a lower end of the upper flap 102 and a second end attached to a fixed part 108 of the circuit breaker arrangement; a second member 110 having a first end attached to an upper end of the lower flap 104 and a second end attached to an end of a third member 114, wherein the other end of the third member 114 is attached to the first member 109. The first member 109, the second member 110 and the third member 114 enable the breaker part 106 to be operably coupled to the upper flap 102 and the second flap 104, via a connecting member mechanism (fourth member 116 and fifth member 118). The present arrangement leads to synchronized closing and opening of the upper flap 102 and the lower flap 104. However, during maintenance of the cable compartment, manually opening the lower flap 104 inadvertently opens the upper flap 102 due to connecting linkages. This unintended interaction poses safety risks, as it exposes the maintenance personnel to live lines or residual charges.

To address this issue, the present invention proposes an improved linkage mechanism that allows the flaps to be operated independently of one another, for example, during maintenance, while still fulfilling their normal function during breaker rack-in/rack-out. Kinematic linkages are employed to achieve this independent operation, ensuring safety and maintaining functionality.

### SUMMARY

According to an aspect, a kinematic linkage arrangement for a flap mechanism of a circuit breaker arrangement is disclosed. The kinematic linkage arrangement includes at least six members operably connected therebetween, such that one or more of the six members are operably connected to an upper flap and a lower flap of the flap mechanism, wherein the kinematic linkage arrangement, when operated causes the members to, provide and/or limit access to one or more of a busbar compartment via movement of the upper flap, and a cable compartment of the circuit breaker arrangement via movement of the lower flap. The kinematic linkage arrangement is operably coupled to a breaker part associated with the circuit breaker arrangement.

In an embodiment, the kinematic linkage arrangement includes a first member and a second member operably coupled to a breaker part. An operable coupling of the first member and the second member to the breaker part enables synchronous operation of the upper flap and the lower flap during an operational phase of the circuit breaker arrangement. The first member is further operably coupled to the upper flap via a first set of linkages, and the second member is further operably coupled to the lower flap via a second set of linkages. The first member along with the first set of linkages form a first four-bar linkage mechanism. Similarly, the second member along with the second set of linkages also form a second four-bar linkage mechanism. Advantageously, the first four-bar linkage mechanism and the second four-bar linkage mechanism are operably coupled to the breaker part associated with the circuit breaker arrangement, thereby enabling synchronous movement of the upper flap and the lower flap, during operation of the circuit breaker, and an asynchronous movement of the upper flap and the lower flap, that is, independent opening/closing of the upper flap and the lower flap, during maintenance of the circuit breaker.

In an embodiment, the first set of linkages consists of a third member having a first end operably coupled to the first member and a second end operably coupled to a fourth member connected to the upper flap, wherein a linear motion of the first member results in a rotary motion of the fourth member. In an embodiment, the second set of linkages consists of a fifth member having a first end operably coupled to the second member and a second end operably coupled to a sixth member connected to the lower flap, wherein a linear motion of the second member results in a rotary motion of the sixth member.

In an embodiment, to enable independent movement of the upper flap with respect to the lower flap, a first decoupling mechanism is provided on the first member, that decouples the first member from the breaker part upon being actuated using a decoupling tool. Similarly, to enable independent movement of the lower flap with respect to the upper flap, a second decoupling mechanism is provided on the second member, that decouples the second member from the breaker part upon being actuated using the decoupling tool. In an embodiment, the decoupling mechanism involves inserting a key (decoupling tool) into a keyhole provided on the first member (or second member) for decoupling the first member (or second member) from the breaker part. Other examples of decoupling tools may include pry bars, wedges and customized tools. The maintenance personnel may use the decoupling tool exclusively for maintenance operations. However, it must be understood that other suitable mechanisms may also be used to decouple the first member and/or the second member from the breaker part for maintenance.

The first set of linkages consists of a third member having a first end operably coupled to the first member and a second end operably coupled to a fourth member connected to the upper flap, wherein a linear motion of the first member results in a rotary motion of the fourth member. The second set of linkages consists of a fifth member having a first end operably coupled to the second member and a second end operably coupled to a sixth member connected to the lower flap, wherein a linear motion of the second member results in a rotary motion of the sixth member. The first member and the second member are actuated by movement of the breaker part, wherein such movement of the breaker part results in opening of the upper flap or the lower flap based on a direction of motion of the breaker part.

According to another aspect, a circuit breaker arrangement comprising at least a switching compartment, cable compartment, busbar compartment, characterized by a kinematic linkage arrangement as described above, at least partially accommodated in the switching compartment is disclosed. The kinematic linkage arrangement facilitates access to one of a busbar compartment and a cable compartment of the circuit breaker arrangement.

The above mentioned and other features of the invention will now be addressed with reference to the accompanying drawings of the present invention. The illustrated embodiments are intended to illustrate, but not limit the invention.

### BRIEF DESCRIPTION OF FIGURES

The present invention is further described hereinafter with reference to illustrated embodiments shown in the accompanying drawings, in which:
FIG 1 shows a flap mechanism 100 of a circuit breaker arrangement, in accordance with prior art;
FIGS 2A-C show perspective views of a flap mechanism for a circuit breaker arrangement, in accordance with various embodiments of the present invention; and
FIG 3 illustrates a sectional view of a switchgear such as an air insulated switchgear having the flap mechanism, in accordance with an embodiment of the present invention.

### DETAILED DESCRIPTION

Various embodiments are described with reference to the drawings, wherein like reference numerals are used to refer like elements throughout. For example, the numeral 210A, 210B and 210C refer to like elements that perform the same functions in different embodiments of the invention. In the following description, for the purpose of explanation, numerous specific details are set forth to provide thorough understanding of one or more embodiments. It may be evident that such embodiments may be practiced without these specific details.

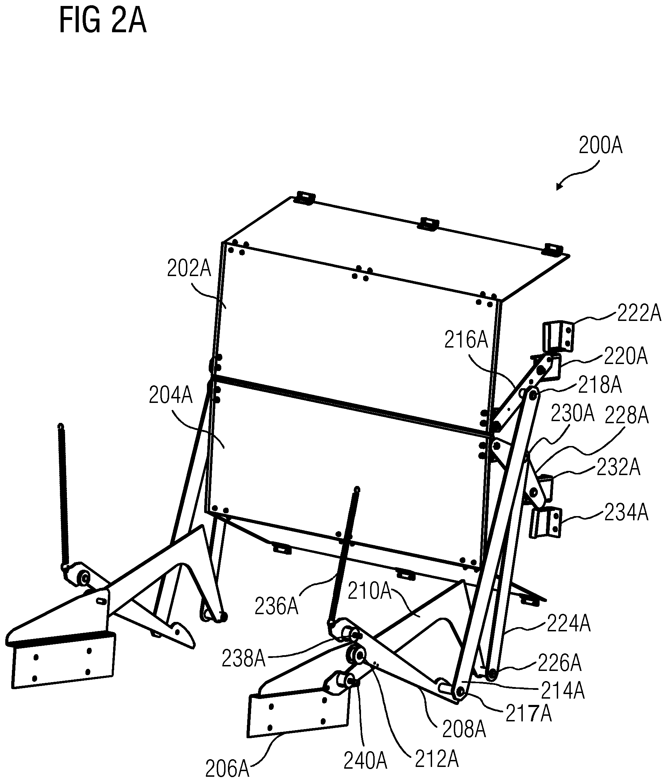

FIG 2A shows perspective view of a flap mechanism 200A for a circuit breaker arrangement, in accordance with an embodiment of the present invention. The flap mechanism includes a kinematic linkage arrangement formed via members 208A, 210A, 214A, 216A, 224A and 228A operably connected therebetween. The kinematic linkage arrangement is provided on either side of an upper flap 202A and a lower flap 204A. The kinematic linkage arrangement provides access to one of a busbar compartment (not shown), of the circuit breaker arrangement, concealed by the upper flap 202A and a cable compartment concealed by the lower flap 204A. The kinematic linkage arrangement is operably coupled to a breaker part 206A associated with the circuit breaker arrangement (not shown). The actuation of the breaker part 206A during operation of the circuit breaker arrangement results in synchronous movement, that is, opening and closing of the upper flap 202A and/or lower flap 204A via the kinematic linage arrangement. In particular, the kinematic linkage arrangement is mirrored on either side of the flap mechanism as shown in FIGS 2A-C.

In FIG 2A, a first end of each of the first member 208A and the second member 210A are operably coupled to the breaker part 206A as shown. The breaker part 206A includes a roller 212A that moves over a rail, during rack in or rack out operations of the circuit breaker arrangement. The roller 212A provides an angular separation between a first member 208A and the second member 210A as shown. As the roller 212A rotates in a direction towards the flap mechanism, during operation of the circuit breaker arrangement, the angular separation between the first member 208A and the second member 210A reduces. Further, a second end of the first member 208A is pivotably joined to one end of a third member 214A via a second revolute/pin joint 217A. The other end of the third member 214A is pivotably joined to the middle of a fourth member 216A via a third revolute/pin joint 218A. Each of the revolute joints 217A, 218A, etc., are moving pivots formed using one or more of bolts, pins, clevises, yokes, etc. One end of the fourth member 216A is connected to a lower end of the upper flap 202A, and the other end is connected to a fixed pivot 220A provided on a structure of the circuit breaker arrangement. The degree of motion of the fourth member 216A on the fixed pivot 220A is limited by a fixed stopper 222A provided above the fixed pivot 220A as shown. In particular, the first member 208A acts as an input link receiving a trigger to move due to a motion of the breaker part 206A, the third member 214A acts as an intermediate/coupler link that transfers this motion from the first member 208A to the fourth member 216A, and the fourth member 216A acts as a follower/output link that transfers a force from the motion to the upper flap 202A.

The second member 210A is an L-shaped bar that is operably coupled to the breaker part 206A at one end, and to one end of a fifth member 224A at the other end via a fourth revolute joint 226A. The other end of the fifth member 224A is pivotably joined, via a revolute joint 230A, to the mid of a sixth member 228A that transfers motion of the fifth member by 90°. In the present embodiment, the sixth member 228A is a bell crank member. One end of the sixth member 228A is pivotably joined to an upper end of the lower flap 204A and another is connected to a fixed pivot 232A provided on the structure of the circuit breaker arrangement. The motion of the sixth member 228A is restricted by a fixed stopper 234A provided below the fixed pivot 232A, as shown. Here, the second member 210A is the driving link, the fifth member 224A is connecting link, and the sixth member is the driven link that transfers a force from motion of the second member 210A to the lower flap 204A.

In a default or rack-out state, the upper flap 202A remains closed as shown, due to the force of gravity. The lower flap 204A is kept closed during racked out state, by means of a spring mechanism 236A.

During maintenance, the kinematic linkage arrangements are independently operable via key mechanisms provided on the first member 208A and the second member 210A of the upper flap 202A and the lower flap 204A. In particular, a first keyhole 240A provided on the first member 208A is used for decoupling the first member 208A from the breaker part 206A, and a second keyhole 244A provided on the second member 210A is used for decoupling the second member 210A from the breaker part 206A.

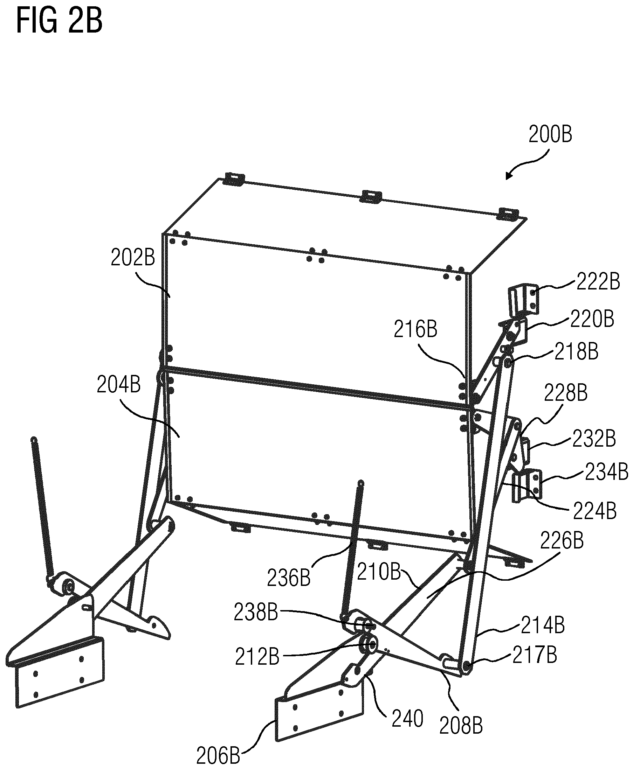

FIG 2B shows perspective view of a flap mechanism 200B for a circuit breaker arrangement, in accordance with another embodiment of the present invention. The functionalities of the components 202B, 204B... 240B are similar to the components 202A, 204A... 240A of FIG 2A. In the present embodiment, the second member 210B is a straight bar 210B, in place of the L-shaped bar 210A of FIG 2A.

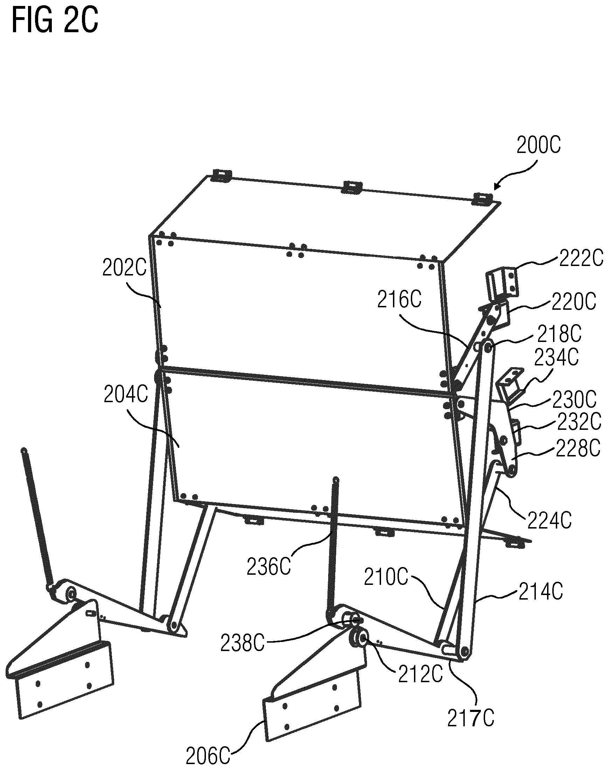

FIG 2C shows perspective view of a flap mechanism 200C for a circuit breaker arrangement, in accordance with yet another embodiment of the present invention. The functionalities of the components 202C, 204C... 240C are similar to the components 202A, 204A...240A of FIG 2A. Herein, the first member 208C and the second member (not shown) are of the same type and do not have an angular separation between them as shown. Furthermore, the position of the fixed stopper 234C and the fixed pivot 232C are reversed compared to the positions of 234A and 232A of FIG 2A, or of 234B and 232B of FIG 2B, in order to facilitate restricted movement of the sixth member 228C as in the previous embodiments, given the lack of angular separation between the first member and the second member. Therefore, it may be understood that various embodiments of the present invention may be derived with similar components based on varied arrangements of the first member and the second member.

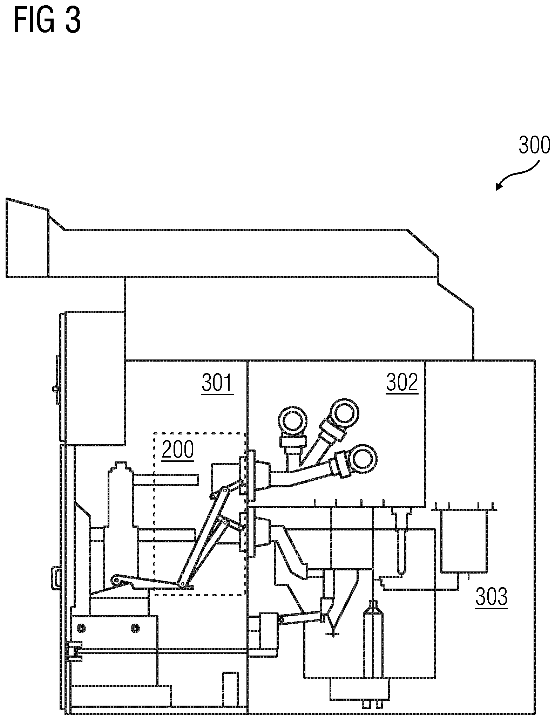

FIG 3 illustrates a sectional view of a switchgear 300 such as an air insulated switchgear having a flap mechanism 200 (within the dashed-line rectangle) shown in FIGS 2A-C. The flap mechanism 200 may be one of 200A, 200B and 200C. The switchgear 300 comprises a switching compartment 301, a busbar compartment 302 and a cable compartment 303. The flap mechanism 200 is similar to one of the flap mechanisms 200A-C as described earlier with reference to FIGS 2A-C and positioned within the switching compartment 301.

Advantageously, the invention introduces a solution with a specifically designed kinematic linkage arrangement that allows independent operation of upper and lower flaps. This design mitigates safety hazards during maintenance by preventing unintentional exposure to live lines or residual charges. Despite maintaining synchronous operation of the upper flap and the lower flap during regular use, the invention allows for independent function with minimal modifications to existing parts, making it simple and cost-effective to implement. The technical advantage of this invention lies in its ability to ensure safety and efficiency during maintenance without sacrificing the core synchronous functionality of the upper flap and the lower flap.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of reference numerals

100 a flap mechanism in accordance with prior art
102 upper flap
104 lower flap
106 breaker part
108 fixed part
109 first member
110 second member
114 third member
116 fourth member
118 fifth member
200A flap mechanism for a circuit breaker arrangement, in accordance with an embodiment of the present invention
202A upper flap
204A lower flap
206A breaker part
208A first member
210A second member
212A roller
214A third member
216A fourth member
217A second revolute/pin joint
218A third revolute/pin joint
220A fixed pivot
222A fixed stopper
224A fifth member
226A fourth revolute joint
228A sixth member
230A revolute joint
232A fixed pivot
234A fixed stopper
236A spring mechanism
240A first keyhole
244A second keyhole
200B flap mechanism for a circuit breaker arrangement, in accordance with another embodiment of the present invention
200C flap mechanism for a circuit breaker arrangement, in accordance with yet another embodiment of the present invention
300 switchgear
301 switching compartment
302 busbar compartment
303 cable compartment

## Claims

1. A kinematic linkage arrangement for a flap mechanism (200A) of a circuit breaker arrangement, the kinematic linkage arrangement comprising:
at least six members (208A, 210A, 214A, 216A, 224A and 228A) operably connected therebetween, such that one or more of the six members (208A, 210A, 214A, 216A, 224A and 228A) are operably connected to an upper flap (202A) and a lower flap (204A) of a flap mechanism for a circuit breaker arrangement, wherein the kinematic linkage arrangement, when operated causes the members (208A, 210A, 214A, 216A, 224A and 228A) to, provides and/or limit access to one or more of a busbar compartment via movement of the upper flap (202A), and a cable compartment of the circuit breaker arrangement via movement of the lower flap (204A), wherein the kinematic linkage arrangement is operably coupled to a breaker part (206A) associated with the circuit breaker arrangement.

2. The kinematic linkage arrangement according to claim 1, comprising:
a first member (208A) and a second member (210A) operably coupled to the breaker part (206A), wherein the first member (208A) is further operably coupled to the upper flap (202A) via a first set of linkages (214A, 216A), and wherein the second member (210A) is further operably coupled to the lower flap (204A) via a second set of linkages (224A, 228A).

3. The kinematic linkage arrangement according to claim 2, wherein an operable coupling of the first member (208A) and the second member (210A) to the breaker part (206A) enables synchronous operation of the upper flap (202A) and the lower flap (204A) during an operational phase of the circuit breaker arrangement.

4. The kinematic linkage arrangement according to claim 2 or 3, wherein a first decoupling mechanism is provided on the first member (208A) to enable independent movement of the upper flap (202A) with respect to the lower flap (204A), wherein the first decoupling mechanism (240A) decouples the first member (208A) from the breaker part (206A) upon being actuated using a decoupling tool.

5. The kinematic linkage arrangement according to claim 2 or 4, wherein a second decoupling mechanism (244A) is provided on the second member (210A) to enable independent movement of the lower flap (204A) with respect to the upper flap (202A), wherein the second decoupling mechanism (244A) decouples the second member (210A) from the breaker part (206A) upon being actuated using the decoupling tool.

6. The kinematic linkage arrangement according to any of the claims 2 to 5, wherein the first set of linkages (214A, 216A) consists of a third member (214A) having a first end operably coupled to the first member (208A) and a second end operably coupled to a fourth member (216A) connected to the upper flap, wherein a linear motion of the first member (208A) results in a rotary motion of the fourth member (216A).

7. The kinematic linkage arrangement according to any of the claims 2 to 6, wherein the second set of linkages (224A, 228A) consists of a fifth member (224A) having a first end operably coupled to the second member (210A) and a second end operably coupled to a sixth member (228A) connected to the lower flap (204A), wherein a linear motion of the second member (210A) results in a rotary motion of the sixth member (228A).

8. A circuit breaker arrangement comprising at least a switching compartment (301), a cable compartment (303) and a busbar compartment (302), **characterized by** a kinematic linkage arrangement according to claims 1 to 7, at least partially accommodated in the switching compartment (301), wherein the linkage arrangement facilitates access to one of a busbar compartment (302) and a cable compartment (303).
